# EUROPEAN PATENT APPLICATION

(11) **EP 4 850 956 A1**
(43) Date of publication of application: **09.12.2026**
(21) Application number: 26180847.1
(22) Date of filing: 25.05.2026
(51) Int. Cl.: B60K 17/02, B60K 17/08, B60K 17/16, F16H 3/08, F16H 3/093

(54) **ELECTRIC AXLE FOR INDUSTRIAL OR COMMERCIAL VEHICLE**

(30) Priority: 05.06.2025 IT 202500013042
(71) Applicant: FPT Industrial S.p.A., 10156 Torino (IT)
(72) Inventor: PESOLA, Fabio, 10156 Torino (IT); ESPOSITO, Pietro, 10156 Torino (IT); TESSITORE, Marco, 10156 Torino (IT)
(74) Representative: Fiume, Orazio

(57) **Abstract**

Electric axle (EA) for industrial or commercial vehicles comprising a differential with output shafts (H1, H2), a first electric machine (EMG) having a drive shaft (SM1), a first transmission shaft (S1) parallel but not coaxial with one of the output shafts (H1) comprising a second transmission wheel (R2), fixed to the first transmission shaft, and a fourth transmission wheel (R4) selectively connectable to the first transmission shaft by means of a first engagement device (CL1), a second transmission shaft (S2), parallel but not coaxial with one of the output shafts (H1) and with the first transmission shaft (S1), comprising a third transmission wheel (R3) selectively connectable to the second transmission shaft by means of a second engagement device (CL2), and a fifth transmission wheel (R5) fixed to the second transmission shaft (S2) which simultaneously meshes with said fourth transmission wheel and with an eighth transmission wheel (R8) connected to the differential.

## Description

### Field of the invention

The present invention relates to the field of electric propulsion systems, in particular in the field of industrial and commercial vehicles provided with an electrified axle with a single or double electric machine capable of providing driving and braking torque to the transmission gear trains.

The electric axle of the present invention belongs to the category of axles known as off-axis axles, since the axis of rotation of one or more electric machines is parallel but not coaxial with the axis of rotation of the wheels.

### State of the art

In the field of commercial and industrial vehicles, a massive electrification is ongoing, which involves the replacement of internal combustion engines or their integration with electric machines incorporated in the transmission system for transmitting motion to the wheels.

Industrial and commercial vehicles are designed to maximise the available load space; therefore, one of the fundamental aspects concerns the provision of compact axles capable of being integrated into vehicle frames while minimising vehicle development costs and times.

Furthermore, it should be considered that such axles require high driving torques and, in order to ensure such performance, it is necessary to provide a gear system capable of ensuring high transmission ratios in cases where the torque of the electric machine is insufficient.

To balance compactness, weight, high transmission ratio (thus maximum torque at the wheels) and maximum speeds, multi-speed transmission systems may be adopted. Where the electric power is insufficient, the number of electric machines integrated in the system is increased, operating them in parallel or in series.

An important parameter that affects the design of an electrified axle in industrial and commercial vehicles is the efficiency of the axle, specifically under the conditions where the application is most frequently used; this generally corresponds to long-distance driving conditions, i.e. when the vehicle travels on highways, where a reduced reduction ratio between the drive shaft of the electric machines and the rotation axis of the wheels is used. Mechanical efficiency is a function of multiple factors, including the number of gear meshes transmitting torque. Therefore, given the constraints outlined above, it is important to ensure high efficiency under long-distance operating conditions.

### Summary of the invention

The object of the present invention is to ensure high efficiency under the above-described operating conditions and constraints in an axle provided with one or two electric machines.

The basic idea of the present invention is to provide a first transmission shaft parallel but not coaxial with one of the output shafts of the axle, comprising a second transmission gear fixed on the first transmission shaft, and a fourth transmission gear selectively connectable to the first transmission shaft by means of a first clutch device; a second transmission shaft, parallel but not coaxial with one of the output shafts and with the first transmission shaft, comprising a fifth transmission gear fixed on the second transmission shaft, and a third transmission gear selectively connectable to the second transmission shaft by means of a second clutch device, wherein the first transmission shaft is connected in torque transmission with the drive shaft, the second transmission gear meshes with the third transmission gear, the fourth transmission gear meshes with the fifth transmission gear and the second transmission shaft is operatively connected in torque transmission with the output shafts. When the first clutch device is in the engaged condition, the second clutch device is necessarily in neutral, and vice versa.

When the first clutch device is in the engaged condition, the second transmission shaft behaves as an idler gear that does not contribute to the transmission ratios.

According to the invention, the second transmission shaft comprises a fifth transmission gear fixed to the second transmission shaft meshing with an eighth transmission gear, wherein the eighth transmission gear is connected in torque transmission with the differential, such that when the first clutch device is in the engaged condition, the fifth transmission gear, integral with the second transmission shaft, behaves as an idle gear; this implies that torque is transmitted directly from the first transmission shaft to the eighth transmission gear, which is very close to the differential.

Advantageously, in this operating condition the lowest transmission ratio is obtained, particularly suitable for extra-urban travel, which represents one of the typical operating missions of an industrial or commercial vehicle, in which the reduced number of gear meshes results in higher efficiency and thus reduced energy consumption due to lower losses related to the gear engagements themselves. The dependent claims describe preferred variants of the invention, forming an integral part of the present description.

### Brief description of the figures

Further objects and advantages of the present invention will become clear from the detailed description that follows of one embodiment thereof (and of its variants) and from the attached drawings provided purely by way of explanation and not limitation, in which:
Figures 1 and 2 show two embodiments of a drive axle according to the present invention;
Figures 1a and 1b show enlargements of respective portions of Figure 1;

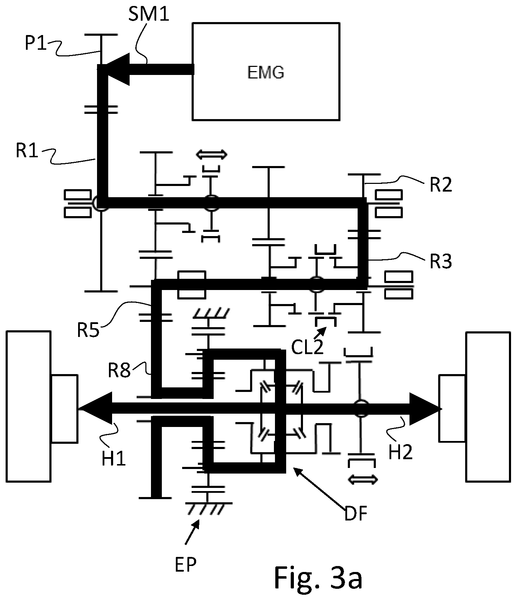

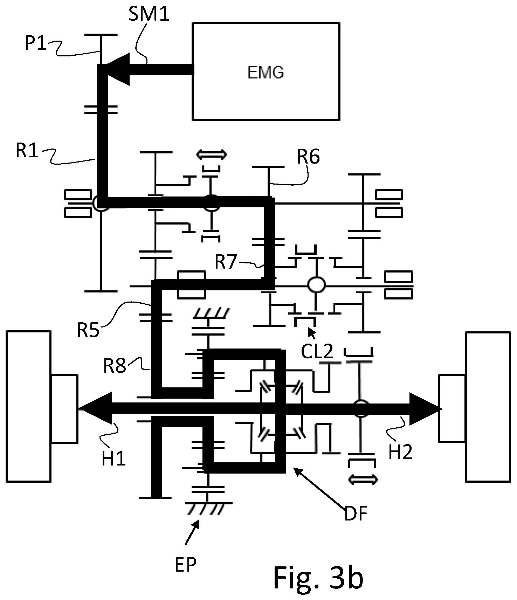

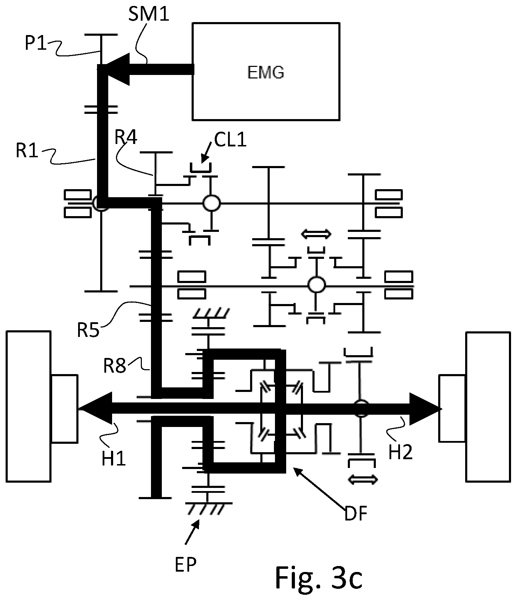

Figures 3a - 3c show possible operating conditions of the drive axle, highlighting torque flows respectively of a first, second and third gear and the components involved in the respective torque exchanges.

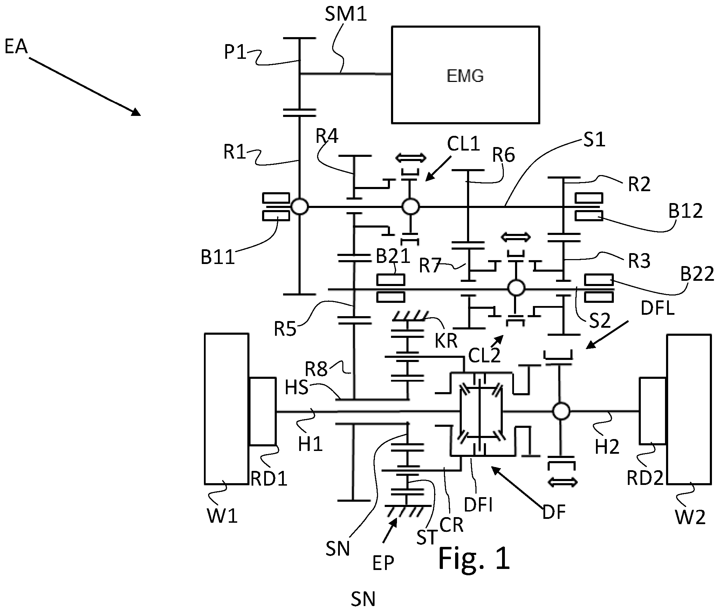

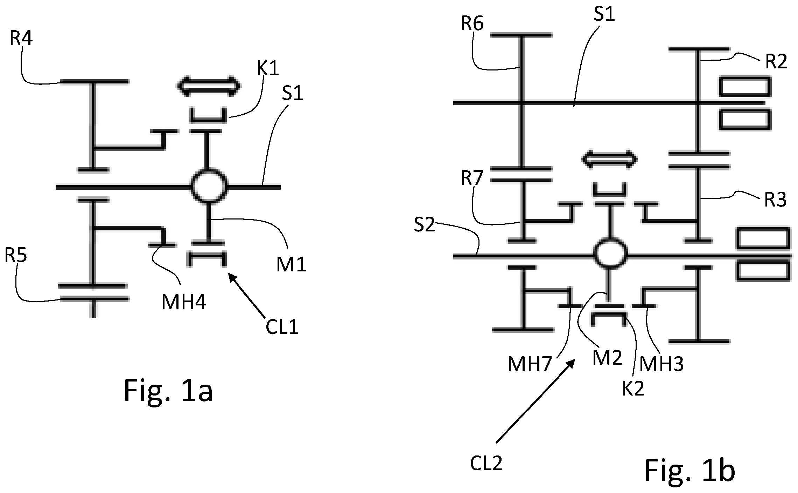

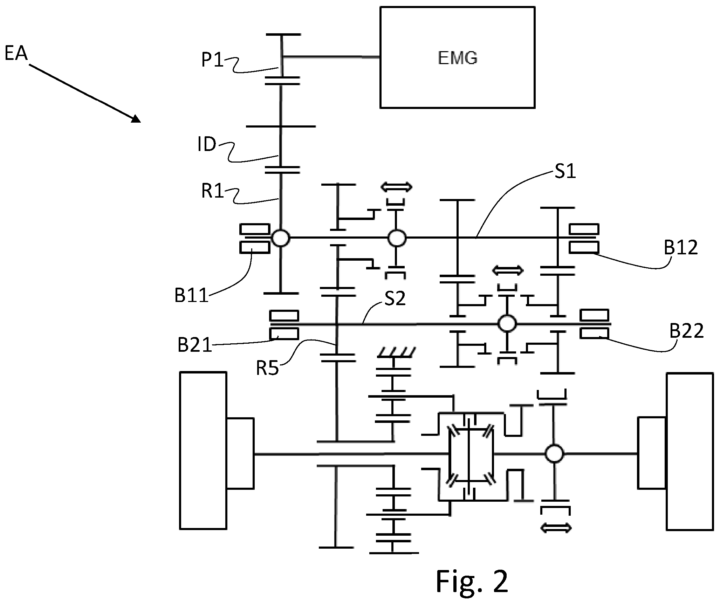

It should be noted that in Figure 2, for ease of representation, the reference numerals identifying components identical to those shown in Figure 1 are omitted.

In the drawings, some gears are fixed on a respective transmission shaft as they are mechanically coupled, for example by interference or by splined coupling; in such a case, a small circle is shown at the intersection between the gear and the respective shaft. In the absence of such a circle, it is understood that the gear is directly machined on the transmission shaft.

It should also be noted that the terms "first", "second", "third", "upper", "lower" and the like may be used herein to distinguish various elements. These terms do not imply a spatial, sequential or hierarchical order for the modified elements unless specifically stated or inferable from the text.

The elements and features illustrated in the different preferred embodiments, including the drawings, may be combined with each other without departing from the scope of protection of the present application as defined below.

### Detailed description of embodiments

With reference to Figure 1, the electric axle EA according to the present invention comprises a differential DF provided with an input port DFI, which generally coincides with the differential housing, and output shafts H1, H2 for driving in rotation respective vehicle wheels W1, W2.

The output shafts may coincide or may not coincide with the so-called half-shafts. When they do not coincide, the half-shafts are connected to the output shafts.

The axle comprises an electric machine EMG having a drive shaft SM1, a first transmission shaft S1 parallel but not coaxial with one of the output shafts H1, and a second transmission shaft S2, parallel but not coaxial with one of the output shafts H1 and with the first transmission shaft S1.

The first transmission shaft comprises a second transmission gear R2, fixed or integrally formed on the first transmission shaft, and a fourth transmission gear R4 selectively connectable with the first transmission shaft by means of a first clutch device CL1.

Within the present description, when it is stated that "a transmission gear is fixed with a respective transmission shaft", this means that they are constrained to rotate rigidly together.

The second transmission shaft S2 comprises a fifth transmission gear R5 fixed or integrally formed on the second transmission shaft S2, and a third transmission gear R3 selectively connectable with the second transmission shaft by means of a second clutch device CL2.

The first transmission shaft S1 is connected in torque transmission with the drive shaft SM1 and the second transmission shaft S2 is operatively connected in torque transmission with said input port DFI of the differential DF.

The second transmission gear R2 meshes with the third transmission gear R3, the fourth transmission gear R4 meshes with the fifth transmission gear R5, and when the first clutch device CL1 is in the engaged condition, the second clutch device CL2 is necessarily in neutral, and vice versa.

The first transmission shaft S1 further comprises a sixth transmission gear R6 fixed or integrally formed with the first transmission shaft S1 and the second transmission shaft S2 comprises a seventh transmission gear R7 selectively connectable with the second transmission shaft by means of the second clutch device CL2, wherein said sixth transmission gear meshes with the seventh transmission gear.

This means that the second clutch device can achieve three operating conditions, namely:
engagement of the third transmission gear R3,
engagement of the seventh transmission gear R7, or neutral.

Figure 1a shows an enlargement of Figure 1 of the portion comprising the first selection device CL1 and Figure 1b shows an enlargement of Figure 1 of the portion comprising the second selection device CL2.

The first hub M1 is fixed with the first transmission shaft S1 and the fourth hub MH4 is fixed with the fourth transmission gear R4; the first sleeve K1 is coupled by means of a splined coupling with the first hub M1 and can slide axially thereon to engage the fourth hub MH4, so as to selectively make the first hub M1 and the fourth hub MH4 integral with each other.

The second hub M2 is fixed with the second transmission shaft S2, the seventh hub MH7 is fixed with the seventh transmission gear R7 and the third hub MH3 is fixed with the third transmission gear. The second sleeve K2 is coupled by means of a splined coupling with the second hub M2 and can slide axially thereon to selectively engage the seventh hub MH7 or the third hub MH3, so as to selectively make the second hub M2 and the seventh hub MH7 integral with each other or the second hub M2 and the third hub MH3 integral with each other.

Both clutch devices can simultaneously assume the neutral condition.

The fact that both clutch devices CL1, CL2 can assume the neutral condition makes it possible to introduce the coasting or sailing function by disconnecting the electric machine(s) and part of the transmission gear trains from the vehicle wheels while the vehicle is moving when the accelerator pedal is released, thereby effectively increasing axle efficiency by reducing mechanical energy losses due to a lower number of components rotating simultaneously.

Furthermore, the fact that both clutch devices CL1, CL2 can assume the neutral condition makes it possible to implement a vehicle towing function, wherein the electric machine is disconnected from the differential, thereby allowing easier towing of the vehicle in the event of failure thereof.

The engagement systems CL1 and CL2 are advantageously of the rapid engagement "dog clutch" type with frontal or radial engagement teeth, non-synchronised, or they may also be synchronised clutch devices with friction synchroniser rings of mono- or multi-cone type known per se.

According to the variant of Figure 1, a pinion P1 is rigidly keyed or integrally formed on the drive shaft SM1 and the first transmission shaft S1 comprises a first transmission gear R1, fixed with the first transmission shaft, which meshes with the pinion P1.

Preferably, the second transmission shaft S2 is supported by second bearings B21, B22, wherein a first bearing B21 of said second bearings is arranged between the fifth transmission gear R5 and the second clutch device CL2, thereby effectively realising a cantilever mounting of the gear R5 with respect to the bearing B21.

According to the variant of Figure 2, a pinion P1 is rigidly keyed or integrally formed on the drive shaft and the first transmission shaft S1 comprises a first transmission gear R1 fixed with the first transmission shaft, and the pinion P1 and the first transmission gear R1 mesh with a common idle gear ID.

This solution advantageously moves the body and the axis of the electric machine away from the shaft S1, allowing a pinion P1 and a first transmission gear R1 of smaller diameter to be implemented while maintaining an unchanged transmission ratio between them.

Advantageously, with a first transmission gear R1 having a smaller diameter than the variant of Figure 1, the second transmission shaft can be supported by bearings B21 and B22 arranged at opposite ends of the second transmission shaft. Thus, the entire second shaft S2, including the fifth transmission gear R5, is contained between the bearings B21 and B22, with all the advantages related to this type of support.

According to both variants, the first transmission shaft S1 is supported by first bearings B11, B12 arranged at opposite ends of the first transmission shaft.

According to the invention, the second transmission shaft S2 is connected in torque transmission with the input port of the differential by means of the gears R5, R8 and preferably by means of an epicyclic reduction gear EP.

Since the epicyclic reduction gear is optional, the eighth transmission gear R8 is defined as "proximate" to the differential, as it is the first gear, following the active torque flow, coaxial with the differential.

The epicyclic reduction gear may have one or two reduction stages.

The epicyclic reduction gear is arranged coaxially with the differential and comprises a sun gear SN, coaxial with one of the output shafts H1, H2, which meshes with at least one satellite ST supported by a carrier CR fixed with said input port DFI of the differential.

The satellites mesh internally with the sun gear SN and externally with a ring gear KR fixed with a housing (not shown) of the axle. Such epicyclic reduction gear may be of the conventional type as described or may also be of the two interconnected satellites type known in the art as a "planetary stepped gearset" having a higher reduction ratio.

Preferably, the second transmission shaft S2 comprises a fifth transmission gear R5 fixed or integrally formed with the second transmission shaft which meshes with an eighth transmission gear R8 fixed with the sun gear SN.

The sun gear and the eighth transmission gear R8 are keyed and fixed on a common hollow shaft HS.

Preferably, the differential DF comprises differential locking means DFL according to the prior art.

Preferably, the output shafts may further be provided with hub reduction gears RD1, RD2 known per se, arranged in a position proximal to the vehicle wheels W1, W2.

The clutch devices CL1 and CL2 may comprise friction cone elements of the absolute synchroniser type or friction elements.

When the clutch devices CL1 and CL2 comprise friction elements, during shifting from first gear to second gear or to third gear it is possible to ensure a continuous torque value available at the wheels W1, W2 and thus to the propulsion of the vehicle during the transient from one gear to another, thereby achieving the so-called "powershift" function by means of slipping of the clutches themselves.

Embodiment variants of the non-limiting example described are possible without departing from the scope of protection of the present invention, including all embodiments equivalent for a person skilled in the art, within the scope of the claims.

From the above description, a person skilled in the art is able to implement the subject-matter of the invention without introducing further constructional details.

## Claims

1. Electric axle (EA) for industrial or commercial vehicle comprising
- a differential (DF) equipped with an input port (DFI) and output shafts (H1, H2) to drive in rotation respective vehicle wheels (W1, W2),
- a first electric machine (EMG) having a drive shaft (SM1),
- a first drive shaft (S1) parallel but not coaxial with one of the output shafts (H1) comprising
. a second drive wheel (R2), fixed on the first drive shaft, and
. a fourth drive wheel (R4) selectively connectable with the first drive shaft by means of
- a first clutch device (CL1),
- a second drive shaft (S2), parallel but neither coaxial with one of the output shafts (H1) nor with the first drive shaft (S1), comprising
. a fifth drive wheel (R5) fixed on the second drive shaft (S2), and
. a third drive wheel (R3) selectively connectable to the second drive shaft by means of
- a second clutch device (CL2),
wherein the first drive shaft (S1) is connected to the drive shaft (SM1) in torque drive, the second drive wheel (R2) meshes with the third drive wheel (R3), and wherein when said first clutch device (CL1) is in engaged condition then said second clutch device (CL2) is necessarily in neutral and vice versa, and wherein said fifth drive wheel (R5) meshes simultaneously with said fourth drive wheel (R4) and with an eighth drive wheel (R8) connected in torque drive with said input port (DFI) of the differential (DF).

2. Axle according to claim 1, wherein said first drive shaft (S1) further comprises a sixth drive wheel (R6) fixed to the first drive shaft and said second drive shaft (S2) comprises a seventh drive wheel (R7) selectively connectable to the second drive shaft by means of said second clutch device (CL2) and wherein said sixth drive wheel meshes with the seventh drive wheel, so as to provide a total of three different gears.

3. Axle according to any of claims 1 or 2, wherein both clutch devices (CL1, CL2) can simultaneously assume the neutral condition.

4. Axle according to any of the preceding claims, wherein a pinion (P1) is keyed to said drive shaft (SM1) and wherein said first drive shaft (S1) comprises a first drive wheel (R1), fixed to the first drive shaft, which meshes with said pinion.

5. Axle according to claim 4, wherein the second drive shaft (S2) is supported by second bearings (B21, B22), wherein a first bearing (B21) of said second bearings is arranged between said fifth drive wheel (R5) and said second clutch device (CL2).

6. Axle according to any of claims 1 - 3, wherein a pinion (P1) is keyed to said drive shaft and wherein said first drive shaft (S1) comprises a first drive wheel (R1), fixed with the first drive shaft, and wherein the pinion (P1) and the first drive wheel (R1) mesh on a common idle wheel (ID).

7. Axle according to claim 6, wherein the second drive shaft (S2) is supported by second bearings (B21, B22), arranged at opposite ends of the second drive shaft.

8. Axle according to any of claims 5 - 7, wherein the first drive shaft (S1) is supported by first bearings (B11, B12) arranged at opposite ends of the first drive shaft.

9. Axle according to any of the preceding claims 1 - 8, wherein said eighth drive wheel (R8) is connected to said input port (DFI) of the differential by means of an epicyclic reduction gear (EP).

10. Axle according to claim 9, wherein the epicyclic reduction gear is arranged coaxially with said differential and comprises a sun gear (SN), coaxial with one of said output shafts (H1, H2), which engages at least one satellite (ST) supported by a satellite carrier (CR) fixed with said input port (DFI) of the differential.

11. Axle according to claim 10, wherein the sun gear and the eighth drive wheel (R8) are keyed and fixed on a common hollow shaft (HS) coaxial with said output shafts (H1, H2).

12. Axle according to any of the preceding claims 2 - 11, wherein when said first clutch device is in engagement condition, the axle performs the third gear defining a lowest reduction ratio.

13. Axle according to any of the preceding claims, wherein the differential (DF) comprises locking means (DFL) of the differential (DF).

14. Industrial or commercial vehicle comprising an electric axle according to any of the claims 1 - 13.
